(19) Europäisches Patentamt
European Patent Office
Office européen des brevets

(11) Publication number: 0 077 096 A2

# (12) EUROPEAN PATENT APPLICATION

(21) Application number: 82201237.3

(22) Date of filing: 04.10.82

(51) Int. Cl.³: C 08 L 63/00, C 08 G 59/18 // (C08L63/00, 33/08)

(30) Priority: 14.10.81 US 311137

(43) Date of publication of application: 20.04.83 Bulletin 83/16

(84) Designated Contracting States: BE CH DE FR GB IT LI NL SE

(71) Applicant: SHELL INTERNATIONALE RESEARCH MAATSCHAPPIJ B.V., Carel van Bylandtlaan 30, NL-2596 HR Den Haag (NL)

(72) Inventor: Bell, James Paul, 34 Farmstead Road, Storrs Connecticut 06268 (US)

(74) Representative: Pulster, Antonius Tonnis, Mr. et al, P.O. Box 302, NL-2501 CH The Hague (NL)

## (54) Curable compositions and process for preparing a cured composition.

(57) The invention provides curable compositions comprising (1) 100 part by weight of an epoxy compound containing at least one vicinal epoxy group, (2) from 1 to 25 parts by weight of a saturated poly(alkyl acrylate) having a molecular weight of less than 10,000 and a carboxyl functionality greater than 1.15 and (3) a curing amount of an epoxy curing agent, which compositions may be cured by application of heat.

The composition may be used as adhesives, surface coatings, in preparing laminates, in castings, and in encapsulation of electrical equipment.

EP 0 077 096 A2

# CURABLE COMPOSITIONS AND PROCESS FOR PREPARING A CURED COMPOSITION

This invention relates to curable compositions and processes for preparing cured compositions.

Epoxy resins are employed in a wide range of uses, including moulding compositions, coatings, paints and adhesives. For some applications, there is a need for high impact resistance in the cured resins. Various methods have been employed to toughen epoxy compositions. One method involves copolymerization of epoxy resins with rubbery resins. Another method involves the creation of simultaneous interpenetrating networks (SIN). The most common technique is to polyblend a polymeric composition into the epoxy-curing agent system. Very good additives are the so-called reactive liquid prepolymers of dienes and acrylonitrile, a typical unsaturated prepolymer of the carboxy butadiene/ acrylonitrile (CTBN) type being marketed under the trade mark "HYCAR". While these prepolymers do increase the toughness of epoxy resin systems, they have the disadvantage of being unsaturated.

According to the present invention there is provided a curable composition comprising (1) 100 parts by weight of an epoxy compound containing at least one vicinal epoxy group, (2) from 1 to 25 parts by weight of a saturated poly(alkyl acrylate) having a molecular weight of less than 10,000 and a carboxyl functionality greater than 1.15 and (3) a curing amount of an epoxy curing agent.

Curable compositions of the invention may be prepared by mechanically mixing together components (1), (2) and (3). The resulting compositions may be used, for example, as adhesives for substrates such as metal, wood, concrete and plaster, as surface coatings for various types of surface, in the preparation of laminates, in the formation of castings and mouldings, and

for the encapsulation of electrical equipment. The compositions are curable by application of heat. The invention specifically provides a process for preparing a cured composition, e.g. in the form of an article, which comprises casting a composition of the invention and curing with application of heat.

In the cured composition the poly(alkyl acrylate) is coupled with the epoxy compound via the carboxyl groups. Because the poly(alkyl acrylate) is saturated, the cured compositions, which are impact resistant, are potentially more stable to harsh environments than prior art systems involving unsaturated prepolymers.

It is preferred for the epoxy compound to be one which is liquid at ambient temperature, but semi-solid epoxy compounds and mixtures of solid and liquid epoxy compounds may be employed.

The epoxy compounds in the compositions of the invention contain on average more than one vic-epoxy group per molecule, i.e., more than one

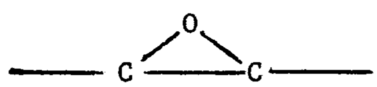

group per molecule. These epoxy compounds may be saturated or unsaturated, aliphatic, cycloaliphatic, aromatic or heterocyclic, and are substituted, if desired, with non-interfering substituents, such as halogen atoms, hydroxy groups and ether radicals. They may also be monomeric or polymeric. Preferred liquid epoxy compounds include the so-called liquid glycidylpolyethers of polyhydric phenols and polyhydric alcohols. As used herein the terms "epoxide equivalent weight" and "weight per epoxide" (WPE) refer to the average molecular weight of the epoxy compound divided by the average number of oxirane groups present in the individual molecules.

Various examples of epoxy compounds which may be used in the compositions of this invention are given in U.S. Patent No. 3,477,990 (e.g., column 2, line 39 to column 4, line 75).

Preferred epoxy compounds are the glycidyl polyethers of polyhydric phenols and polyhydric alcohols, particularly the glycidyl polyethers of 2,2-bis(4-hydroxyphenyl)propane, and more particularly those having an average molecular weight between 300 and 3,000 and an epoxide equivalent weight (WPE) between 140 and 2,000. Especially preferred are the diglycidyl polyethers of 2,2-bis(4-hydroxyphenyl)propane having a WPE between 140 and 500 and an average molecular weight of from 300 to 900.

Other suitable epoxy compounds include those compounds derived from polyhydric phenols and having at least one vicinal epoxy group wherein the carbon-to-carbon bonds within the six-membered ring are saturated. Examples of such saturated epoxy compounds are described in U.S. Patent No. 3,336,241. Preferred saturated epoxy compounds are the hydrogenated glycidyl ethers of 2,2-bis(4-hydroxyphenyl)propane, sometimes called the diglycidyl ethers of 2,2-bis(4-cyclohexanol)propane.

Other examples of suitable epoxy compounds are the glycidyl novolac resins, such as the glycicyl phenol-aldehyde condensates described in U.S. Patent No. 2,658,885.

The poly(alkyl acrylate) may conveniently be prepared in emulsion, bulk or solution free-radical polymerization. Preferably the poly(alkyl acrylate) is prepared in accordance with the invention by polymerizing, (1) a monomer composition comprising an alkyl acrylate at a temperature from 55°C (i.e. about 60°C) to 150°C in the presence of, (2) a free radical initiator, and (3) a chain transfer agent.

Advantageous alkyl acrylates are the acrylates containing from about 2 to about 8 carbon atoms in the alkyl group, with from about 3 to 5 being preferred. A particularly preferred alkyl acrylate is n-butyl acrylate. The poly(alkyl acrylate) may be a homopolymer or a copolymer, preferably of n-butyl acrylate. Suitable comonomers include, for example, acrylic acid, methacrylic acid, glycidyl methacrylate, alkyl glycidyl ethers and, preferably, ethylene diacrylate. Up to about 30 parts by weight of comonomer may be used per 100 parts by weight of alkyl acrylate.

Preferably the poly(alkyl acrylate) is poly(n-butyl acrylate) or a copolymer of n-butyl acrylate with ethylene diacrylate.

Suitable free-radical initiators include the azo-compounds such as azobiscyanovaleric acid, 2,2'-azobisisobutyronitrile, dimethyl 2,2'-azobisisobutyrate, 2,2'-azobis-(2,4-dimethylvaleronitrile), and 2,2'-azobisisotolyamide, as well as peroxides such as benzoyl peroxide, tertiary butyl hydroperoxide, ditertiary butyl peroxide, methyl cyclohexyl peroxide, cumene hydroperoxide, and acetyl benzoyl peroxide. These and other suitable examples of free-radical initiators are disclosed in U.S. Patent No. 3,377,406.

4,4'-Azobis-(4-cyanovaleric acid) is a preferred free-radical initiator.

The chain transfer agent is used to control the molecular weight of the eventual poly(alkyl acrylate). Suitable chain transfer agents include carbon tetrahalides, such as carbon tetrachloride or carbon tetrabromide, alcohols, such as ethanol or tertiary butanol, ketones, such as acetone, methyl ethyl ketone or methyl isobutyl ketone, aromatic hydrocarbons, such as benzene, toluene or xylene, or mercapto compounds, such as dithioglycolic acid.

A liquid chain transfer agent may be used as a solvent for the reaction. Otherwise the chain transfer agent may conveniently be used in an amount from about 1 to 10%w based on alkyl acrylate monomer.

Preferably the chain transfer agent comprises dithioglycolic acid and/or an organic solvent selected from the group consisting of ketones and alcohols, preferably tertiary butanol or acetone.

By varying the nature and quantities of the monomer composition, the free-radical initiator and the chain transfer agent, the molecular weight and the molecular weight and carboxyl functionality of the poly(alkyl acrylate) may be varied. Preferably the molecular weight is at least 2,500, more

preferably at least 4,000. The carboxyl functionality preferably ranges from 1.15, advantageously about 1.25, to about 2.0.

Suitable epoxy curing agents include the known alkaline and acidic epoxy curing agents. Examples of suitable curing agents include, among others, the polybasic acids and their anhydrides, such as the di-, tri- and higher carboxylic acids such as oxalic acid, phthalic acid, terephthalic acid, succinic acid, alkyl and alkenyl-substituted succinic acids, tartaric acid, and, particularly, the polymerized unsaturated acids, such as, for example, those containing at least 10 carbon atoms, and preferably more than 14 carbon atoms, as for instance dodecenedioic acid, 10,12-eicosadienedioic acid, and anhydrides such as phthalic anhydride, succinic anhydride, maleic anhydride, nadic anhydride, and pyromellitic anhydride.

Other types of acids that are useful include those containing sulphur, nitrogen, phosphorus or halogens; chloridic acid, benzene phosphinic, sulphonyl dipropionic acid bis-(4-carboxyphenyl)amide.

Preferred curing agents are amino-containing compounds, such as, for example, diethylene triamine, triethylene tetramine, dicyandiamide, melamine, pyridine, cyclohexylamine, benzyldimethylamine, benzylamine, diethylaniline, triethanolamine, piperidine, tetramethylpiperazine, N,N-dibutyl-1,3-propane diamine, N,N-diethyl-1,3-propane diamine, 1,2-diamino-2-methylpropane, 2,3-diamino-2-methylbutane, 2,3-diamino-2-methylpentane, 2,4-diamino-2,6-dimethyloctane, dibutylamine, dioxtylamine, dinonylamine, distearylamine, diallylamine, dicyclohexylamine, methylethylamine, ethylcyclohexylamine, pyrrolidine, 2-methylpyrrolidine, tetrahydropyridine, 2-methylpiperidine, 2,6-dimethylpiperidine, diaminopyridine, tetramethylpentane, and meta-phenylene diamine, and soluble adducts of amines and poly-epoxides and their salts, such as are described in U.S. Patents Nos. 2,651,589 and 2,640,037. Still other examples include the acetone soluble reaction products of polyamines and

monoepoxides; the acetone soluble reaction products of polyamines with unsaturated nitriles, such as acrylonitrile; imidazoline compounds as obtained by reacting monocarboxylic acids with polyamines; sulphur and/or phosphorus-containing polyamines as obtained by reacting a mercaptan or phosphine containing active hydrogen with an epoxide halide to form a halohydrin, dehydrochlorinating and then reacting the resulting product with a polyamine; soluble reaction product of polyamines with acrylates, and many other types of reaction products of the amines.

Still other curing agents that may be used include boron trifluoride and complexes of boron trifluoride with amines, ethers, and phenols; Friedel Crafts metal salts, such as aluminium chloride, zinc chloride; and other salts, such as zinc fluoborate, magnesium perchlorate and zinc fluosilicate; and inorganic acids and partial esters, such as phosphoric acid and partial esters thereof including n-butyl orthothiophosphate, diethyl orthophosphate and hexaethyltetraphosphate.

Other curing agents which may be employed include the polyamides containing active amino and/or carboxyl groups, and preferably those containing a plurality of amino hydrogen atoms. Examples of polybasic materials used in making these polyamides include, among others, 1,10-decanedioic acid, 1,12-dodecanedienedioic acid, 1,20-eicosadienedioic acid, 1,14-tetradecanedioic acid, 1,18-octadecanedioic acid and dimerized and trimerized fatty acids as described above. Amines used in making the polyamides include preferably the aliphatic and cycloaliphatic polyamines such as ethylene diamine, diethylene triamine, triethylene tetramine, tetraethylene pentamine, 1,4-diaminobutane, 1,3-diaminobutane, hexamethylene diamine, and 3-(N-isopropylamino)propylamine. Especially preferred polyamides are those derived from the aliphatic polyamides containing no more than 12 carbon atoms and polymeric fatty acids obtained by dimerizing and/or trimerizing ethylenically unsaturated fatty

acids containing up to 25 carbon atoms. These preferred polyamides have a viscosity between 10 and 750 poises at 40°C., and preferably 20 to 250 poises at 40°C. Preferred polyamides also have amine values of 50 to 450.

Still further curing agents are those based on melamine reaction products containing methylol substituents.

Still other suitable curing agents comprise the imidazoles and benzimidazoles as well as adducts thereof with epoxy resins. Suitable such imidazoles and adducts thereof are described in U.S. Patents Nos. 3,438,937 and 3,756,984.

Especially preferred epoxy curing agents are the amino-containing compounds. Preferably the amino-containing compound is selected from 2,4,6-tris(dimethyl amino methyl)phenol, methylene dianiline, and 2,5-dimethyl-2,5-hexanediamine.

One or more of various conventional additives may be included in the compositions of the invention, such as solvents, curing agent accelerators, antioxidants, fungicides, diluents, pigments, fillers, fibrous materials, dyes, resins, polyolefins, plasticizers, and extenders.

Preferred curable compositions according to the invention contain from about 10 to about 20 parts by weight of the poly-(alkyl acrylate) per 100 parts by weight of epoxy compound.

The amount of curing agent may vary considerably depending upon the particular agent employed, but in general, the curing agents are preferably utilized in at least 0.6 chemical equivalent amounts, preferably 0.8 to 2.0 equivalent amounts, and more preferably 1.0 to 1.5 equivalent amounts. An equivalent amount is that amount needed to give one active H (or anhydride group) per epoxy group.

Those skilled in the art of epoxy compounds will appreciate that curing temperatures for compositions will vary according to the nature of the selected curing agent. Preferred temperatures however range from 100 to 200°C, more preferably 120 to 150°C.

The invention will be further understood from the following examples.

Unless otherwise indicated, parts and percentages are by weight.

The polymerization of the alkyl acrylate monomer was performed in a reactor designed for both solution and bulk polymerization techniques under essentially atmospheric pressure and variable temperatures. The essential parts of the reactor assembly were as follows:

(a) a mixer with a large anchor-shape blade, in which mixing intensity was controlled by a variable transformer, typical rotation speeds being of the order of 500 rpm;
(b) a condenser;
(c) optional 10, 30 and 50 ml syringes for slow dripping of monomers into the reactor container;
(d) an adjustable flow rate syringe pump (Sage Instruments, model 355);
(e) a reactor, with optional 300, 500 and 1,000 ml containers;
(f) a temperature controlled oil bath operated in the range of 60°C to 125°C, with an accuracy of ± 1°C;
(g) a vapour trap (connected to the top of the condenser);
(h) a nitrogen flowmeter (Matheson model 610);
(i) a nitrogen cylinder and nitrogen inlet;
(j) a bath thermometer; and
(k) a safety cork.

The alkyl acrylate was polymerized by several procedures using the various options of the reactor assembly. In solution polymerization, the initiator and the chain transfer agent were dissolved in the polymerization solvent and placed in the reactor. The monomers were added to the solution either instantly or continuously through the syringe pump arrangement. At the beginning of the polymerization the reactor was flushed

with nitrogen for about two minutes, and then kept under a continuous low flow rate (30% of the flowmeter full scale) of nitrogen until the end of the reaction.

In the bulk polymerization procedure the initiator and the chain transfer agent powders were mixed together and placed in the reactor. The monomers were then poured into the reactor container and thoroughly mixed with the powders. The container atmosphere was flushed with nitrogen. Polymerization occurred within a few minutes or less.

Various samples for mechanical and microscopic study were cut from cured epoxy plates. The plates were basically prepared by the same general procedure. Hot (usually 80°C to 120°C) liquid epoxy resin or epoxy/rubber composition, was thoroughly hand mixed with curing agent for about a minute. Then air bubbles were degassed from the mixture for a few minutes in a vacuum oven at 80°C. The resulting clear mixture was then cast and placed in the controlled oven for a curing cycle (controlled temperature/time) (generally 120°C/120 minutes). The cured epoxy plates were slowly cooled down to ambient temperature to minimize stress concentrations.

Glass plates were coated with a fine film of a release agent prior to casting. Release agent, MS-136 by Miller-Stephenson, was sprayed on the glass surface in 2-4 layers. Two flexible gasket thicknesses were used in casting: typically 1.5 mm for the plates used in the TIT tests, and typically 3.0 mm for the plates used in the Izod tests.

The samples were cut from the plates into strips and machined to standard shapes and sizes in the following steps:

1. The plate was cut into long strips, 13.2 to 14 mm wide, on a Do All band saw.
2. The two sawn sides of the strips were ground to the exact size of 12.70 ± 0.05 mm by use of an abrassive wheel.

3. The thin strips (1.5 mm) were milled to standard dog-bone shape according to ASTM D638-68.
4. The thick strips (3.0 mm) were notched with a standard cutter, according to ASTM D256-56.

The molecular weights of the alkyl acrylate polymers were determined by vapour pressure osmometry (VPO) using a KNAVER vapour pressure osmometer calibrated using standard low molecular polystyrene.

The carboxyl contents were determined by single acid-base titration techniques.

Titration procedure: The polymer samples were accurately weighed in a 300 ml round bottom flask. 50 ml of methanol and 100 ml of acetone were pipetted into the flask. The solution was stirred for about 20-30 minutes. The starting pH of the solution was in the range of 4.0 to 6.0. Standardized 0.5N KOH solution was then continuously added to the sample solution at a rate of about 0.1 ml/min by use of a syringe pump (accuracy of the syringe ± 0.01 ml). The inflection endpoint occurred at about pH 10.5.

Calculation of carboxyl content: The blank solution of methanol and acetone is neutral; therefore, the carboxyl content can be determined by simple acid-base titration calculation procedure.

The acid-base titration procedure was checked with acrylic acid and carboxyl-terminated acrylonitrile/butadiene copolymer. The method was found to be accurate and reproducible.

The impact strength of the epoxy-poly(alkyl acrylate) cured samples was determined by the standard Notched Izod test according to ASTM D256-56 using a TMI model TM 52004 machine. Impact test data was also obtained using a Tensile Impact Tester (TIT) which is a modified version of the Plastechon Universal Tester by Plas-Tech, which was operated at a ram speed of 1,500 mm/sec (3,550 in/min) with a nitrogen pressure of 50 psi ($3.447 \times 10^5$ Pa). The maximum stroke was 2.54 cm.

An Instron tester, table model TM-S, 1130, was used for the low strain rate tensile testing. The samples were cut to a standard dog-bone shape, and the Tensile Impact Tester (TIT) grips were used to clamp the samples during the testing.

The Instron was operated at 1.27 mm/min crosshead speed, 2.54 cm/min chart speed, and the force full scale range was 227 kg. Analysis procedures were according to ASTM D638-68 standard.

An exceptionally good alkyl acrylate monomer is *n*-butyl acrylate. Accordingly, *n*-butyl acrylate was utilized in the Examples.

Polyether A is a diglycidyl ether of 2,2-bis-(4-hydroxyphenyl)propane having an average molecular weight of about 380 and a weight per epoxy (WPE) of about 190.

nBA is normal-butyl acrylate; PnBA is poly(*n*-butyl acrylate).

DMP-30 is 2,4,6-tris(dimethyl aminomethyl)phenol.

MDA is methylene dianiline.

DMHDA is 2,5-dimethyl-2,5-hexanediamine.

ABCVA is 4,4'-azobis-(4-cyanovaleric acid).

EDA is ethylene diacrylate.

DTDGA is dithiodiglycolic acid.

pmr is percent mole ratio of compound to alkyl acrylate (*n*-butylacrylate).

EXAMPLE I

This example illustrates the preparation of poly(*n*-butyl acrylate), hereinafter "PnBA". Utilizing the above-described procedure various PnBA polymers were prepared in two solvents. The results are tabulated as follows:

- 12 -

| PnBA | solvent | | nBA | | ABCVA | | T | $\bar{M}n$ | Carboxyl functionality |
|---|---|---|---|---|---|---|---|---|---|
| # | type | (ml) | (g) | (ml/min) | (g) | pmr | °C | | (f) |
| #1 | t-butanol | 500 | 25.0 | 0.17 | 1.71 | 3.12 | 83 | 4400 | 1.15 |
| #2 | acetone | 500 | 25.0 | 0.19 | 1.17 | 3.12 | 56 | 6900 | 1.30 |
| #3 | acetone | 1000 | 27.3 | 0.2 | 3.43 | 5.7 | 56 | 6200 | 1.28 |

Approximately 10 parts of PnBA# 3 were mixed with 100 parts of Polyether A and the cloudy mixture of epoxy/rubber cured with DMP-30 and the impact strength determined. The results are as follows:

| Polyether A | | PnBA# 3 | | DMP-30 | | Impact strength |
|---|---|---|---|---|---|---|
| (g) | parts | (g) | parts | (g) | parts | Izod (lb-ft/in) |
| 56.50 | 100 | 5.65 | 10.0 | 2.80 | 5.9 | 0.81 ± 0.04 (43.3 ± 2.1 J/m) |
| 52.51 | 100 | 5.24 | 10.0 | 1.23 | 2.3 | 0.96 ± 0.07 (51.3 ± 3.7 J/m) |
| 56.47 | 100 | 5.27 | 9.3 | 0.57 | 1.0 | 1.00 ± 0.11 (53.4 ± 5.9 J/m) |

EXAMPLE II

This example illustrates the use of a branching agent (ethylene diacrylate) to increase the functionality of the PnBA by copolymerizing n-butyl acrylate with ethylene diacrylate (EDA). The molecular weight and carboxyl functionality of the nBA/EDA polymers prepared at 75°C for 20-24 hours under nitrogen atmosphere wherein the monomers were continuously added to the solution by syringe pump, are as follows:

| PnBA # | t-butanol (ml) | nBA | | EDA | | ABCVA | | $\bar{M}n$ | f |
|---|---|---|---|---|---|---|---|---|---|
| | | (g) | (ml/min) | (g) | pmr* | (g) | pmr* | | |
| # 5 | 500 | 25 | 0.23 | 1.35 | 4.1 | 1.11 | 2.0 | 6100 | 1.15 |
| # 6 | 500 | 25 | 0.23 | 3.40 | 10.0 | 1.11 | 2.0 | 6250 | 1.27 |
| # 7 | 1000 | 50 | 0.50 | 6.97 | 10.5 | 1.71 | 1.6 | 5050 | 1.22 |
| # 8 | 500 | 25 | 0.42 | 6.81 | 20.0 | 1.65 | 3.0 | 6200 | 1.30 |
| # 1 | 500 | 25 | 0.17 | -- | -- | 1.71 | 3.1 | 4400 | 1.15 |

* pmr is percent mole ratio of compound to n-butyl acrylate

Composites were then prepared by mixing 100 parts of Polyether A, 10 parts of PnBA #7 with three concentrations of DMHDA. These were cured and the impact strengths were determined. The results are as follows:

| Polyether A | | PnBA #7 | | DMHDA | | amine | Impact strength |
|---|---|---|---|---|---|---|---|
| (g) | parts | (g) | parts | (g) | parts | excess | Izod (lb-ft/in) |
| 61.37 | 100.0 | 6.14 | 10 | 17.18 | 28.0 | 58% | 1.41 ± 0.08 (75.3 ± 4.2 J/m) |
| 46.98 | 100.0 | 4.70 | 10 | 10.79 | 23.0 | 22% | 0.99 ± 0.09 (52.9 ± 4.8 J/m) |
| 47.61 | 100.0 | 4.76 | 10 | 8.84 | 18.6 | 3% | 0.68 ± 0.14 (36.3 ± 7.5 J/m) |

EXAMPLE III

This example illustrates the improvement achieved by the combination of branching and using a diacid chain transfer agent to increase the functionality of the polymer. The procedures of Examples I and II were essentially repeated wherein n-butyl acrylate was polymerized with ethylene diacrylate (EDA) in the presence of dithioglycolic acid (DTDGA). The monomers were added continuously to the solution of the initiator and chain transfer agent in t-butanol. The rate of dripping was 0.2 ml/min. The polymerization was carried out for 24 hours at 76°C. The molecular weight of the PnBA was $\overline{M}n$ = 4400 and the functionality was 1.45. The polymerization formulation was as follows:

| PnBA | t-butanol | nBA | EDA | | ABCVA | | DTDGA | |
|---|---|---|---|---|---|---|---|---|
| # | (ml) | (g) | (g) | pmr | (g) | pmr | (g) | pmr |
| #9 | 1000 | 49.8 | 6.42 | 9.7 | 3.3 | 3.02 | 0.874 | 1.23 |

Two composite plates were prepared with a Polyether A/PnBA#9 mixture cured with MDA and DMP-30. The impact strengths were then determined and the results are as follows:

| Polyether A | | PnBA# 9 | | curing agent | | | Impact strength |
|---|---|---|---|---|---|---|---|
| (g) | parts | (g) | parts | type | (g) | parts | Izod (lb-ft/in) |
| 62.19 | 100 | 7.08 | 11.4 | MDA | 27.74 | 44.6 | 1.48 ± 0.15 (79.0 ± 8.0 J/m) |
| 52.57 | 100 | 5.43 | 10.3 | DPM-30 | 3.21 | 6.1 | 0.64 ± 0.12 (34.2 ± 6.4 J/m) |

EXAMPLE IV

The procedure of Example I was essentially repeated both with and without the use of DTDGA as a chain transfer agent. The polymerizations were carried out at 120°C. The results are as follows:

| PnBA | nBA | | ABCVA | | DTDGA | | $\overline{Mn}$ | f |
|---|---|---|---|---|---|---|---|---|
| # | (g) | mole | (g) | pmr | (g) | pmr | | |
| #10 | 40.21 | 0.314 | 7.01 | 7.96 | - | - | 9700 | 1.90 |
| #11 | 40.21 | 0.314 | 4.00 | 4.55 | 3.00 | 5.25 | 6600 | 1.91 |

The above PnBA polymers (#10 and #11) were then blended with Polyether A (contained 1% wt of tetrabutyl ammonium iodide, TBAI) and cured with several curing agents and the impact strengths were determined. The results are tabulated in Table I.

TABLE I

| Polyether A+TBAI | | PnBA | | | curing agent | | | amine excess | Impact strength | Tensile impact strength | | |
|---|---|---|---|---|---|---|---|---|---|---|---|---|
| (g) | parts | # | (g) | parts | type | (g) | parts | % | Izod (lb-ft/in) | $\sigma u$ Pax$10^{-7}$ | $\varepsilon u$ % | Impact strength J/$m^3$x$10^3$ |
| 68.35 | 100 | 10 | 6.84 | 10.0 | DMHDA | 18.53 | 27.11 | 50.6 | 1.33 ± 0.01 (71.0 ± 0.5 J/m) | 8.98 ± 0.38 | 18.6 ± 2.5 | 10.65 ± 1.25 |
| 48.56 | 100 | 10 | 11.50 | 23.7 | DMHDA | 13.24 | 27.27 | 51.5 | 1.26 ± 0.19 (67.3 ± 10.1 J/m) | 7.86 ± 0.18 | 16.5 ± 1.7 | 8.58 ± 0.97 |
| 70.77 | 100 | 11 | 7.01 | 9.9 | DMHDA | 19.12 | 27.02 | 50.0 | 1.43 ± 0.10 (76.4 ± 5.3 J/m) | 8.68 ± 0.77 | 15.7 ± 1.4 | 7.77 ± 1.57 |
| 38.52 | 100 | 11 | 9.63 | 25.0 | DMHDA | 10.40 | 27.00 | 50.0 | 1.57 ± 0.13 (83.8 ± 6.9 J/m) | 9.15 ± 0.63 | 18.6 ± 1.3 | 8.62 ± 1.02 |
| 68.68* | 100 | 11 | 6.82 | 9.9 | DMP-30 | 0.97 | 1.42 | | 0.89 ± 0.07 (47.5 ± 3.7 J/m) | 7.32 ± 0.15 | 12.9 ± 3.6 | 5.75 ± 1.09 |
| 74.97* | 100 | 11 | 7.50 | 10.0 | DMP-30 | 3.71 | 4.95 | | 1.01 ± 0.12 (53.9 ± 6.4 J/m) | 6.36 ± 1.33 | 10.5 ± 1.1 | 3.76 ± 0.75 |

* Polyether A without TBAI

TABLE I (Cont'd)

| Polyether A+TBAI | | PnBA | | | curing agent | | | amine excess | | Tensile impact strength | | |
|---|---|---|---|---|---|---|---|---|---|---|---|---|
| (g) | parts | # | (g) | parts | type | (g) | parts | % | Impact strength Izod (lb-ft/in) | $\sigma_u$ Pax$10^{-7}$ | $\varepsilon_u$ % | Impact strength $J/m^3 x 10^3$ |
| 67.32 | 100 | 11 | 6.72 | 10.0 | MDA | 25.51 | 37.90 | 47.0 | 1.13 ± 0.13 (60.3 ± 6.9 J/m) | 6.87 ± 1.36 | 15.8 ± 2.8 | 6.15 ± 0.65 |
| 68.35* | 100 | -- | -- | -- | DMHDA | 18.95 | 27.73 | 54.0 | 1.40 ± 0.22 (74.8 ± 11.7 J/m) | 10.36 ± 0.63 | 9.7 ± 2.5 | 5.45 ± 2.55 |
| 60.46* | 100 | -- | -- | -- | DMP-30 | 3.00 | 4.97 | | 1.37 ± 0.27 (73.2 ± 14.4 J/m) | 8.88 ± 0.49 | 9.2 ± 1.9 | 5.47 ± 1.48 |
| 53.15* | 100 | -- | -- | -- | MDA | 20.85 | 39.23 | 50.6 | 1.68 ± 0.22 (89.7 ± 11.7 J/m) | 9.60 ± 0.32 | 9.1 ± 0.7 | 6.03 ± 0.31 |

* Polyether A without TBAI

Four significant results are observed from Table I: (1) The Izod impact strengths of the composites are generally lower than the controls; (2) The tensile impact strengths of the composites are higher than the controls; (3) The ultimate stress of the composites are lower than the controls; (4) The ultimate strains of the composites are larger than the controls (up to 92% higher). These facts, it appears, lead towards two important conclusions: (1) the rubber toughens the epoxy resin as evident from the TIT results, and (2) the toughness of the composites cannot be measured by the Izod impact test since the toughening mechanism occurs throughout the whole sample length by micro-cavitating. This rubber toughening mechanism cannot be fully appreciated by the nature of the fracture imposed on the notched sample in the Izod test. It is believed that the loading conditions in most practical uses of the composites can be closer associated with tensile test conditions than with the notched Izod test. Accordingly, the results of the tensile impact test are accorded more significance than those of the Izod impact test.

EXAMPLE V

In the experiment series of Example IV the curing agent was added to the rubber/epoxy mixture shortly after the two were mixed together. The Polyether A/PnBA/curing agent system was then poured into the mould and placed in the oven for the curing cycle. The relative rates of the curing reaction, and the linking reaction between the carboxyl groups and the epoxide ring, determined the size of the rubber particles, and the degree of grafting between the two phases.

In the present series the competition between these two reactions was eliminated by a two step curing procedure. In the first step, 40 parts of rubber were added to 60 parts of Polyether A + TBAI, and the mixture was placed in the oven for 2 hrs. at 120°C. During this stage the carboxyl-terminated PnBA reacted with the Polyether A with the aid of the TBAI catalyst.

During this reaction the solution of the reactants developed a reddish colour, marking the complex stage before the carboxyl reacted with the epoxy ring. The titration of a sample of the mixture after the reaction was completed showed practically no carboxyl groups in the solution. The large excess of the Polyether A made it possible that each carboxyl group on the ends of the PnBA could react with an untied epoxy molecule. The expected product of this reaction was epoxy/PnBA/epoxy compound.

In the second step the epoxy/PnBA/epoxy compound was dissolved in more epoxy resin to form mixtures of 10 parts and 20 parts of PnBA in 100 parts Polyether A in two separate beakers. Then, the curing agent was added to the solutions and the mixtures were cured at 120°C/60 min. and 150°C/120 min., respectively.

The final compositions of the two-step curing series are as follows:

| Composite | Polyether A+TBAI | | PnBA | | | curing agent | | amine |
|---|---|---|---|---|---|---|---|---|
| | (g) | parts | # | (g) | parts | type | (g) | excess % |
| comparative | 83.52 | 100 | * | 7.41 | 8.8 | MDA | 32.02 | 53.3 |
| 1 | 72.91 | 100 | 11 | 7.26 | 9.9 | DMHDA | 19.08 | 45.4 |
| 2 | 66.96 | 100 | 11 | 13.29 | 19.8 | DMHDA | 17.14 | 42.2 |

* $\bar{M}n$ = 13500, 429 nBA, 3.9g ABCVA, 2.20 g DTDGA @ 69°C

The Izod and the tensile impact strength results are as follows:

| Composite | Impact strength Izod (lb-ft/in) | Tensile impact strength $\sigma_u$ Pax$10^{-7}$ | $\varepsilon_u$ % | Impact strength $J/m^3x10^3$ |
|---|---|---|---|---|
| Comparative | 0.868 ± 0.043 (46.35 ± 2.30 J/m) | -- | -- | -- |
| 1 | 1.699 ± 0.207 (90.73 ± 11.05 J/m) | 9.88 ± 0.43 | 17.4 ± 2.6 | 10.80 ± 2.17 |
| 2 | -- | 8.19 ± 0.39 | 13.0 ± 2.2 | 8.45 ± 1.82 |

## CLAIMS

1. A curable composition comprising (1) 100 parts by weight of an epoxy compound containing at least one vicinal epoxy group, (2) from 1 to 25 parts by weight of a saturated poly(alkyl acrylate) having a molecular weight of less than 10,000 and a carboxyl functionality greater than 1.15, and (3) a curing amount of an epoxy curing agent.

2. A composition according to claim 1, wherein the poly(alkyl acrylate) is a homopolymer or copolymer of n-butyl acrylate.

3. A composition according to claim 2, wherein the poly(alkyl acrylate) is poly(n-butyl acrylate) or a copolymer of n-butyl acrylate with ethylene diacrylate.

4. A composition according to any one of claims 1 to 3, wherein the molecular weight of the poly(alkyl acrylate) is at least 4,000.

5. A composition according to any one of claims 1 to 4, wherein the epoxy compound is a glycidyl polyether of 2,2-bis-(4-hydroxyphenyl)propane.

6. A composition according to any one of claims 1 to 5, wherein the epoxy curing agent is an amino-containing compound.

7. A composition according to claim 6, wherein the amino-containing compound is selected from 2,4,6-tris(dimethyl amino methyl)phenol, methylene dianiline, and 2,5-dimethyl-2,5-hexanediamine.

8. A composition according to any one of claims 1 to 7, wherein the poly(alkyl acrylate) is prepared by polymerizing, (1) a monomer composition comprising an alkyl acrylate at a temperature from 55 to 150°C in the presence of, (2) a free radical initiator, and (3) a chain transfer agent.

9. A composition according to claim 8, wherein the free radical initiator is 4,4'-azobis-(4-cyanovaleric acid).

10. A composition according to claim 8 or 9, wherein the chain transfer agent comprises dithioglycolic acid.

11. A composition according to claim 8, 9 or 10, wherein the chain transfer agent comprises an organic solvent selected from the group consisting of ketones and alcohols.

12. A composition according to claim 11, wherein the solvent is tertiary butanol.

13. A composition according to claim 11, wherein the solvent is acetone.

14. A process for preparing a cured composition which comprises casting a composition according to any one of claims 1 to 13 and curing with application of heat.